# EUROPEAN PATENT APPLICATION

(11) **EP 2 028 401 A2**
(43) Date of publication of application: **25.02.2009**
(21) Application number: 08252745.8
(22) Date of filing: 19.08.2008
(51) Int. Cl.: F16K 43/00

(54) **Improvements in and relating to taps and tap servicing**

(30) Priority: 21.08.2007 GB 0716260
(71) Applicant: Pegler Limited, Doncaster, South Yorkshire DN4 8DF (GB)
(72) Inventor: Wright, Michael, Edenthorpe, Doncaster DN3 2RA (GB)
(74) Representative: Wilson Gunn

(57) **Abstract**

A tap 100 includes a pair of service valves 200 provided to cut off the inflow of water from supply pipes 101 to enable the tap 100 to be serviced. The service valves 200 are provided within service valve housings 111, forming part of the tap housing 110 above the mounting surface. The service valves 200 can be accessed by removing the respective hatches 112 in the service valve housings 111, thus being accessible from the same side of the mounting surface as the tap 100, easing access for servicing the tap 100.

## Description

The present application relates to taps and tap servicing, including in particular an improved tap incorporating a service valve and also to such a service valve.

It is not unknown for domestic water taps, of the type fitted to baths sinks etc. to require servicing or repair. In order to accomplish this, the water supply to the tap should be turned off, to present leakage during the process. This can be achieved by turning off the mains supply to the whole dwelling. As this is inconvenient, an alternative solution is to fit isolation or service valves between the water supply and the tap water supply input. This enables the water supply for the tap in question to be turned off in isolation from that of other nearby taps. Disadvantageously, as such valves are fitted to the water supply, they are found under the bath or sink to which the tap is fitted. This makes such valves awkward to access, if servicing is required.

It is therefore an object of the present invention to overcome or alleviate this problem.

According to a first aspect of the present invention there is provided a tap suitable for mounting to a surface to control the flow of water from a supply beneath or behind said mounting surface, the tap comprising: a water inlet; a water outlet; a user actuable flow control valve provided between said water inlet and said water outlet operable to control the flow of water between said water inlet and said water outlet; and a service valve provided between said water inlet and said flow control valve, the service valve being actuable between a first position wherein water may flow from the water inlet to the flow control valve and a second position wherein water is prevented from flowing between the water inlet and the flow control valve and wherein the service valve is actuable from the same side of the mounting service as the flow control valve.

Providing a service valve that is actuable from the same side of the mounting surface typically the upper or front side of the mounting surface as the flow control valve enables much easier access to the service valve on occasions when repair or servicing of the tap is required or desired.

Preferably, the service valve is both provided on and actuable from the same side of the mounting surface as the flow control valve. The service valve may comprise a sealing member, the sealing member moveable between a first position wherein it presses against and seals the water inlet and a second position wherein water is free to flow into the top from the water inlet. The sealing member may achieve a seal by pressing against a seat sounding the water inlet.

The service valve may be provided within a housing. The housing may form part of or be attached to the tap housing. In order to actuate the service valve, it may be necessary to open the housing. A dedicated hatch may be provided through which the service valve may be accessed. The hatch may be secured in position by means of a screw thread or similar when access to the service valve is not required.

Preferably, the housing has two chambers divided by a wall through which the service valve extends. The first chamber may be provided with the water inlet for the tap and the second chamber may be provided with an outlet enabling water to flow to the flow control valve. Preferably, the exterior of the service valve forms a seal with the wall dividing the chambers. This prevents water flowing between the chambers except through the service valve.

The service valve may have a substantially cylindrical profile, the sealing member comprising one end. The sealing member may further comprise a sealing member washer to improve the sealing of the water inlet when in the first position. The service valve may further comprise one or more inlet slots in its side walls adjacent to the sealing member. The inlet slots allow water to flow from the first chamber into the service valve. The service valve may additionally comprise one or more outlet slots in its side walls, the outlet slots being provided in the portion of the side walls extending into the second chamber. The outlet slots allow water to flow from the service valve into the second chamber.

The end of the service valve opposite to the sealing member may be provided with engaging means. The engaging means enable the service valve to be engaged by a suitable tool and thus enable the sealing member to be driven between the first and second positions. The engaging means may be of any suitable form allowing engagement with a tool including but not limited to a plurality of castellated slots provided in a rim at the end of the service valve, protruding polygonal, recessed polygonal or screw head type formations. The service valve may be provided with suitable thread to allow it to be retained securely at a position in the housing when desired but to be readily moveable between positions when engaged by way of the engaging means.

The service valve may have a two part construction comprising an outer body portion and an inner body portion adapted in use to fit within the outer body portion. The outer and inner body portions may be provided with suitable threads to allow them to fit securely together.

The outer body portion may comprise the sealing member, inlet slots, outlet slots and engaging means as above. The inner body portion may comprise a central chamber having an inner body inlet at one end and one or more inner body outlets. The or each inner body outlet is preferably provided in a side wall of the central chamber towards the end of the central chamber opposite the inlet. The central chamber may be substantially cylindrical in form.

Preferably, the inner body fits within the outer body portion such that a path is provided for the flow of water from the inlet slots through the inner body inlet to the central chamber and then from the central chamber through the inner body outlets to the outlet slots. Preferably, the exterior of the inner body portion forms a seal with the side wall of the outer body portion between the position of the outlet slots and the position of the inlet slots. Preferably, the exterior of the inner body portion forms a further seal with the side walls of the outer body portion above the position of both outlet slots.

The service valve may incorporate any one or more of: a flow regulator; a check valve and a filter. The or each of these items may be provided within the central chamber of the inner body portion.

The tap may be a tap having more than one water inlet. In such embodiments, the tap may be provided with a service valve for each water inlet. The or each water inlet may be connected to a water supply pipe. Typical water supplies may include mains water, hot water or filtered water. In embodiments with more than one water supply, separate flow control valves or a combined flow control valve may be provided, as required or as desired.

According to a second aspect of the present invention there is provided a service valve mounted between and providing a water flow path between two chambers of a housing, the first chambers having a water supply inlet and the second chamber having a water outlet the service valve having a sealing member which is actuable from a first position wherein it presses against and seals the water supply inlet of the first chamber and a second position wherein water is free to flow into the first chamber from the water supply inlet.

The service valve of the second aspect of the present invention may incorporate any or all features of the first aspect of the present invention, as desired or as appropriate.

According to a third aspect of the present invention there is provided a method of servicing a tap according to the first aspect of the second invention or a tap incorporating a service valve according to the second aspect of the present invention comprising the steps of: actuating the service valve from the same side of the mounting surface as the flow control valve is situated to cut off the water supply to the tap; attending to the required servicing; and actuating the service valve from the same side of the mounting surface as the flow control valve is situated to restore the water supply to the tap.

The method of the third aspect of the present invention may incorporate any or all features of the first or second aspects of the present invention as desired or as is appropriate.

In order that the present invention is more clearly understood, one embodiment is described further herein, with reference to the accompanying drawings, in which:
- Figure 1: shows an external view of a mixer tap according to the present invention;
- Figure 2: shows an exploded view of a service valve incorporated into the mixer tap of figure 1;
- Figure 3: shows a side cross-sectional view of the service valve of figure 2;
- Figure 4: shows a front cut away view of the service valve of figure 2;

- Figure 5: illustrates the use of a tool to actuate the service valve in the tap of figure 1; and
- Figure 6: shows a cross-sectional view of the tool use of figure 5.

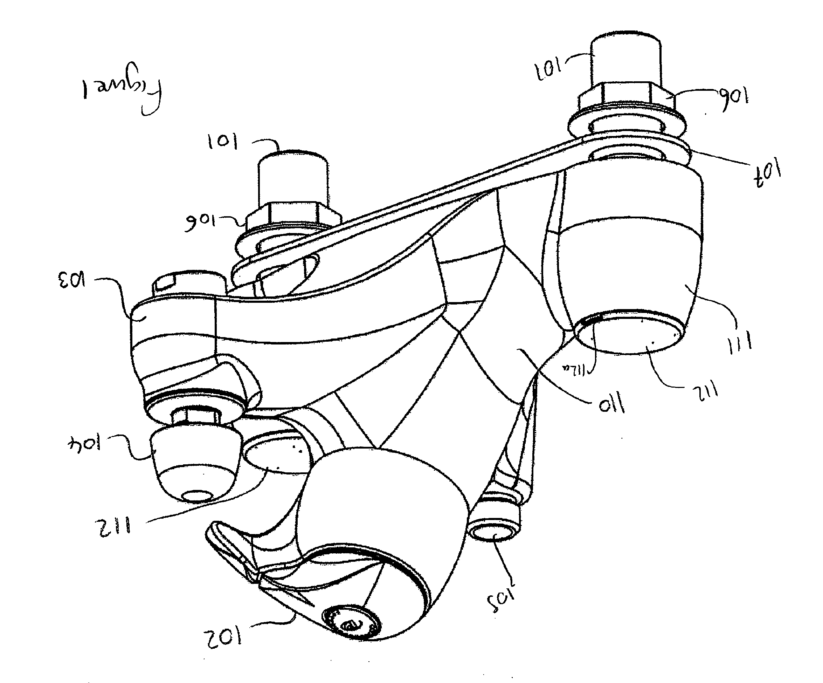

Referring now to figure 1, a mixer tap 100 comprises separate hot and cold water supply pipes 101, which provide a supply of water to the tap 100 through water inlets; a user actuable flow control valve 102 operable to control the flow of the hot and cold water though the tap 100 (in the illustrated example, this valve 102 may be additionally operable to control the temperature of the flow); and a spout 103 through which mixed hot and cold water may flow to a water outlet. In the embodiment shown, the tap 100 also comprises a diverter valve 104 operable to divert water flow from the spout 103 to a shower fitting supply pipe 105 or vice versa. The tap 100 is adapted to be mounted on a surface (not shown but typically a bath, sink or surface adjacent thereto) and is secured to the surface by means of backnuts 106 threaded onto supply pipes 101. A layer 107 of rubber or similar material is provided between the tap 10b and the mounting surface to secure and seal the tap 100 in position.

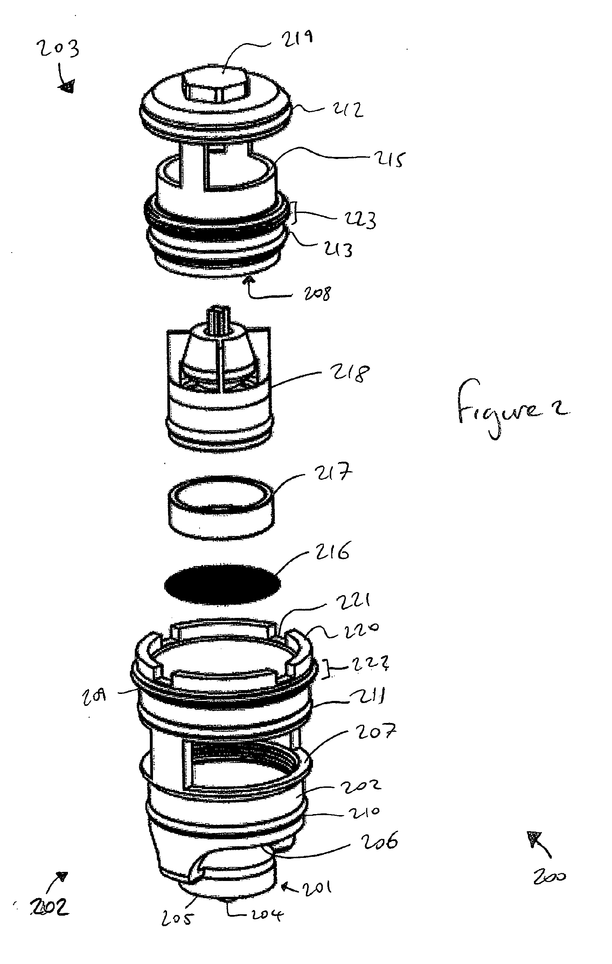

The flow path of the water and the operable parts of the valves are all provided within the tap housing 110. In the present invention, the tap 100 also includes a pair of service valves 200 (shows in more detail in figure 2-4) provided to cut off the inflow of water from supply pipes 101 to enable the tap 100 to be serviced. The service valves 200 are provided within service valve housings 111, forming part of the tap housing 110 above the mounting surface. The service valves 200 can be accessed by removing the respective hatches 112 in the service valve housings 111.

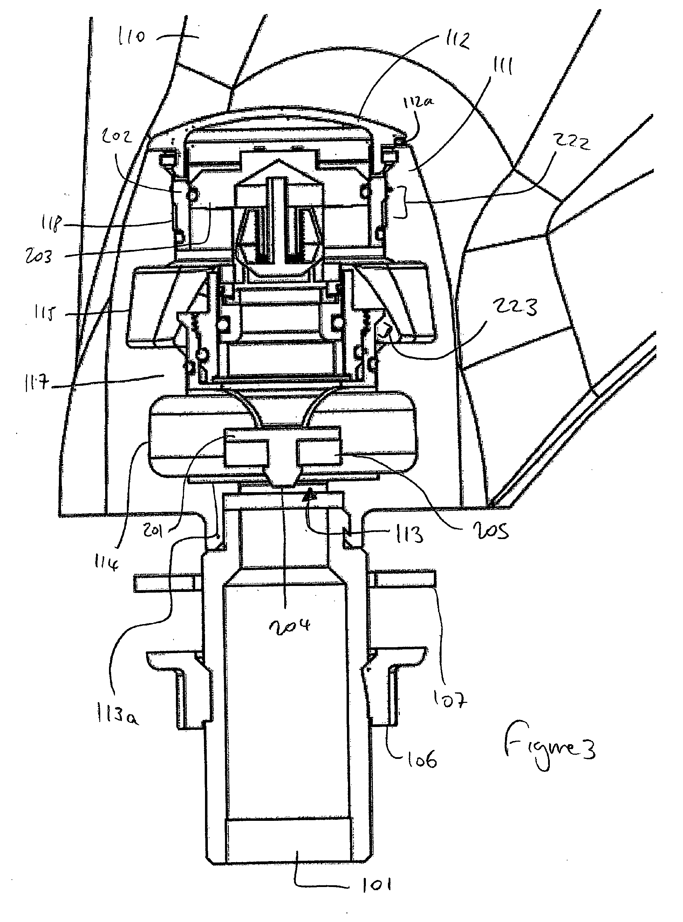

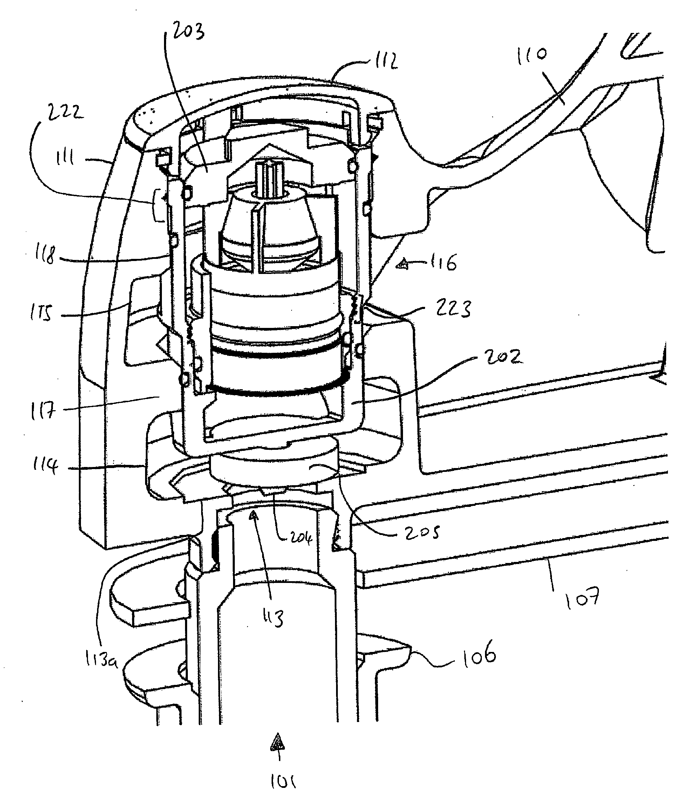

Turning now to figure 2, an exploded view of the service valve 200 is shown. The valve 200 comprises an outer body 202 and an inner body 203 adapted to fit within the outer body 202. The outer body 202 has a generally cylindrical form and is provided with a sealing member 201 which is adapted to be able to substantially seal the water supply inlet 113 of water supply pipe 101 if pressed against a seat 113a (shown in figures 3 and 4) surrounding inlet 113. To help seal the sealing member 201 against the seat 113a surrounding inlet 113, a washer 205 is provided, the washer 205 being retained in place by projection 204. The washer 205 is typically a washer conforming to British Standard BS5412, British Standard BS1010 or any other applicable standard.

Above the sealing member 201 are provided a plurality of inlet slots 206, which allow water to enter the interior of the outer body 202. Directly above the inlet slots 206 is provided a lower outer O-ring seal 210. Above the lower outer O-ring 210 are provided a plurality of outlet slots 207, which enable water to flow out of the outer body 202. At the top of the outer body 202 is provided a rim 220 having castellated slots 221 provided therein. The castellated slots 221 enable the outer body 202 to be engaged and actuated such that the sealing member 201 is moved into or away from a position wherein it presses on the seat 113a surrounding inlet 113 and seals the inlet 113. The position and movement of the outer body 202 in such circumstances is controlled by the provision of corresponding threads 222 on the exterior of the outer body portion 202 and the interior of a narrow neck 118 within housing 111.

The inner body 203 comprises a water inlet 208 at its lower end and water outlets 215 at its upper end. Upon widened brims at either end of the inner body are provided upper and lower O-rings 212 and 213 respectively. Within the substantially cylindrical central chamber of the inner body 203, are provided an inline filter 216, a flow regulator 217 and a check valve 218. The skilled man will of course appreciate that these components 216,217,218 can be obtained in and used in alternative forms to the specific example illustrated in the accompanying drawings. These components 216, 217 and 218 may be retained within the central chamber by use of an optional cap nut which attaches onto the lower end of inner body 203. A projecting nut portion 219 is also provided on the top of inner body 203 to help with traction when applying said cap nut, if required.

In use, the inner body 203 is driven into the outer body 202 and retained in position by means of corresponding threads 223 provided on the exterior of inner body 203 and the interior of outer body 202. The projecting nut portion 219 provides traction when driving the inner body 203 into or out of the outer body 202. The inner body 203 is inserted into the outer body 202 such that O-rings 212 and 213 are respectively above and below the level of the outlet slots 207. In this manner, a flow path is provided for water from the inlet slots 206, firstly through filter 216 (due to the shape of the filter in the embodiment shown) and then through inlet 208, flow regulator 217, check valve 218 and outlets 215 to outlet slots 207.

Turing now to figures 3 and 4, the valve 200 is shown within the service valve housing 111. The service valve housing 111 comprises a first chamber 114 which incorporates the inlet 113 from the water supply pipe 101 and a second chamber 115 which incorporates an outlet 116 through which water can flow to the user actuable flow control valve 102. The chambers 114 and 115 are separated by a wall 117. The valve 200 is provided in the gap in wall 117 and forms a watertight seal with the wall 117 by means of outer lower O-ring 210. Above chamber 116 is the relatively narrow neck 118 in which the upper end of valve 200 is retained. The neck 118 is closed at its top by the hatch 112, thus allowing access to the valve 200 when the hatch 112 is removed. A watertight seal between the neck 118 and the valve 200 is provided by O-ring 209.

In the position shown in figures 3 and 4, the valve 200 allows water to flow from supply pipe 101 into chamber 114, through the service valve 200 into chamber 115 and thence through outlet 116 to the rest of the tap 100. In this position therefore the tap 100 is free to operate as a conventional mixer tap.

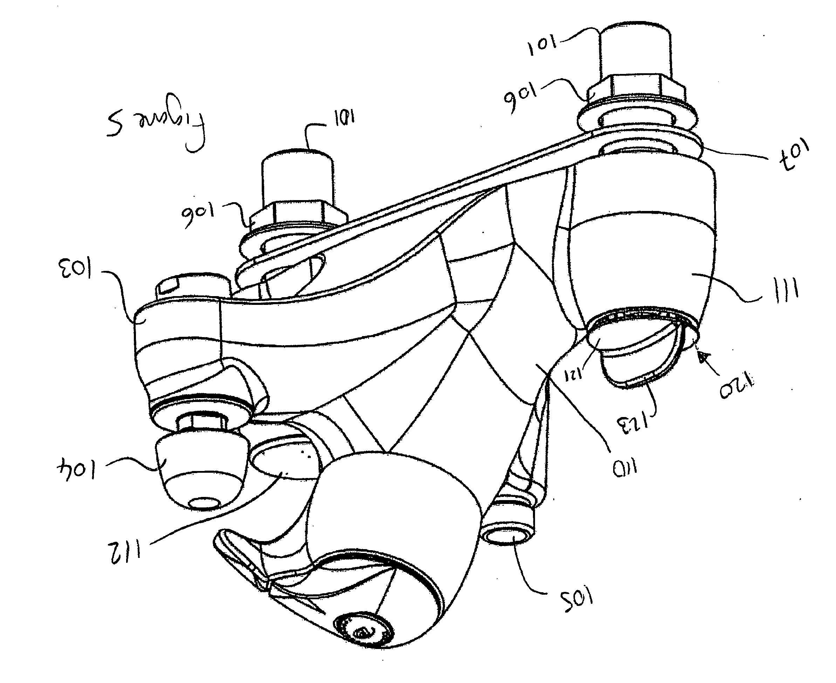

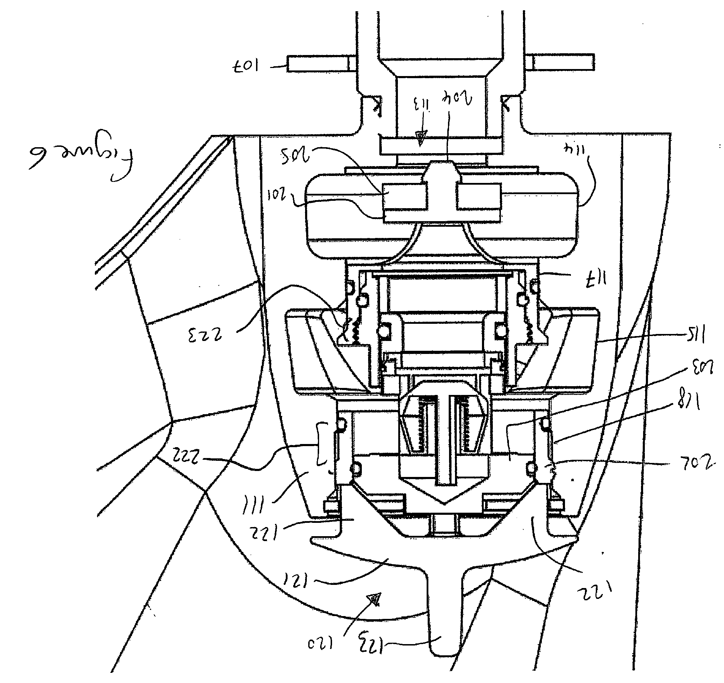

If it is desired to service any of the tap features, the hatch 112 is removed using a suitable tool (not shown) to engage recesses 112a provided. After the hatch 112 is removed, the valve 200 is screwed down in to the service valve housing 111 using the castellated slots 221. This can be achieved by use of a tool 120 as is shown in figures 5 and 6. The tool 120 comprises a body 121, slot engaging means 122 and a handle 123. the handle is adaped to be gripped by a user.

The valve 200 rotates clockwise until the sealing member washer 205 is pressed against the seat 113a surrounding inlet 113 and thus seals off the inlet 113. Once the mains water supply is closed off, the inner body 203 can be unscrewed (anticlockwise) and removed from the outer body 202 (it is of course also possible for the valve 200 to be adapted such that the screw/unscrew directions are reversed). It is then possible to service the flow control valve 102, spout 103, diverter valve 104, shower pipe 105 and any other downstream features i.e. other headworks, cartridges, diverters, flow straighteners or similar. Of course, it is obvious to the skilled man that in an embodiment such as tap 100 with two water supplies 101, both service valves 200 should be used to cut off both water supplies for servicing.

When the inner body 203 is removed, it is possible to unscrew the cap nut 214 to provide access to the incline filter 216, flow regulator 217 and check valve 218 for servicing, cleaning, checking or part replacement. Once any servicing of the components is complete, the inner body 203 and associated components 216, 217, 218 must be reassembled. This involves first inserting check valve 218 into the inner body 203, then insetting the flow regulator 217. In both cases, care should be taken to make sure they are both in the correct orientation i.e. water flows into the round hole 208 at the base and out through the rectangular slots 215 at the side. Of course, as would be apparent to the skilled man, the shapes of the inlets and outlets can differ if desired or if required. Then the inline filter 216 is placed in the correct orientation and the optional cap nut may be attached on to the end of the inner body 203.

At this stage the inner body 203 may be inserted back into the outer body 202. Before doing so, it is beneficial to add a small amount of WRAS a approved grease to the O-rings 212, 213. Once the inner body 203 is inserted back into the outer body 202, it is screwed down until it is fully inserted.

After the inner body 203 is in position, by engaging with the castellated slots 221 a user can rotate the valve 200 anticlockwise (approx 2 full turns). This will lift the sealing member 201 and sealing member washer 205 thus permit the flow of water from maims supply pipe 101 through inlet 113 to chamber 114.

The non-return O-ring 211 is a precaution, in place to stop the service valve outer body 202 being unintentionally over or completely unscrewed when reopening the mains inlet 113. If the outer body 202 is over unscrewed it could cause either, mixing of the water from before and after the service section, or an unwanted leak path to the outside of the tap.

By providing the service valve 200 in a position above the mounting surface, the service valve 200 can be easily and readily actuated to cut the water supply to the tap 100. Traditionally, service valves are provided upstream of a tap in a position hidden beneath the surface, which makes them more difficult to access. The present invention thus provides a tap 100 that is easier to service.

Although the above invention has been described in relation to a particular embodiment of a mixer tap with integral shower diverter, it will be appreciated by the skilled man that the invention may be applied to other forms of tap fittings. It would also be appreciated by the skilled man that whilst the invention has been described in respect of the mounting of a tap unit on a substantially horizontal surface, the invention may be applied to taps mounted on surface at different orientations, up to and including a vertical surface.

It is of course to be understood that the invention is not to be restricted to the details of the above embodiment which is described by way of example only.

## Claims

1. A tap suitable for mounting to a surface to control the flow of water from a supply beneath or behind said mounting surface, the tap comprising: a water inlet; a water outlet; a user actuable flow control valve provided between said water inlet and said water outlet operable to control the flow of water between said water inlet and said water outlet; and a service valve provided between said water inlet and said flow control valve, the service valve being actuable between a first position wherein water may flow from the water inlet to the flow control valve and a second position wherein water is prevented from flowing between the water inlet and the flow control valve and wherein the service valve is actuable from the same side of the mounting service as the flow control valve.

2. A tap as claimed in claim 1 wherein the service valve is both provided on and actuable from the same side of the mounting surface as the flow control valve.

3. A tap as claimed in any preceding claim wherein the service valve is provided within a housing, the housing forming part of or being attached to the tap housing wherein in order to actuate the service valve, it is necessary to open the housing and a dedicated hatch is provided through which the service valve may be accessed.

4. A tap as claimed in claim 3 wherein the housing has two chambers divided by a wall through which the service valve extends wherein the first chamber is provided with the water inlet for the tap and the second chamber is provided with an outlet enabling water to flow to the flow control valve and the exterior of the service valve forms a seal with the wall dividing the chambers.

5. A tap as claimed in any preceding claim wherein the service valve has a substantially cylindrical profile, the sealing member comprising one end; one or more inlet slots in its side walls adjacent to the sealing member; and one or more outlet slots in its side walls, the outlet slots being provided in the portion of the side walls extending into the second chamber.

6. A tap as claimed in any one of claims 3 to 5 wherein the service valve is provided with suitable thread allowing it to be retained securely at a position in the housing when desired but to be readily moveable between positions when engaged by way of engaging means provided.

7. A tap as claimed in any preceding claim wherein the service valve has a two part construction comprising an outer body portion and an inner body portion adapted in use to fit within the outer body portion, the outer and inner body portions being provided with suitable threads to allow them to fit securely together.

8. A tap as claimed in claim 7 wherein the outer body portion comprises the sealing member, inlet slots, outlet slots and engaging means and the inner body portion comprises a substantially cylindrical central chamber having an inner body inlet at one end and one or more inner body outlets and the or each inner body outlet is provided in a side wall of the central chamber towards the end of the central chamber opposite the inlet.

9. A tap as claimed in claim 8 wherein the inner body fits within the outer body portion such that a path is provided for the flow of water from the outer body inlet slots through the inner body inlet to the central chamber and then from the central chamber through the inner body outlets to the outer body outlet slots, the exterior of the inner body portion forming a seal with the side wall of the outer body portion between the position of the outlet slots and the position of the inlet slots and the exterior of the inner body portion forming a further seal with the side walls of the outer body portion above the position of both outlet slots.

10. A tap as claimed in any preceding claim wherein the service valve incorporates any one or more of: a flow regulator, check valve or filter provided within the central chamber of the inner body portion.

11. . A tap as claimed in any preceding claim wherein the tap has more than one water inlet, each water inlet being connected to a water supply pipe and provided with a separate service valve.

12. A service valve mounted between and providing a water flow path between two chambers of a housing, the first chamber having a water supply inlet and the second chamber having a water outlet, the service valve having a sealing member which is actuable from a first position wherein it presses against and seals the water supply inlet of the first chamber and a second position wherein water is free to flow into the first chamber from the water supply inlet.

13. A service valve as claimed in claim 12 wherein the service valve is provided within a housing, the housing having two chambers divided by a wall through which the service valve extends wherein the first chamber is provided with a water inlet and the second chamber is provided with a water outlet, the exterior of the service valve forming a seal with the wall dividing the chambers and wherein in order to actuate the service valve, it is necessary to open the housing and a dedicated hatch is provided through which the service valve may be accessed.

14. A service valve as claimed in claim 12 or claim 13 wherein the service valve has a substantially cylindrical profile, the sealing member comprising one end; one or more inlet slots in its side walls adjacent to the sealing member; and one or more outlet slots in its side walls, the outlet slots being provided in the portion of the side walls extending into the second chamber.

15. A service valve as claimed in any one of claims 12 to 14 wherein the service valve has a two part construction comprising an outer body portion and an inner body portion adapted in use to fit within the outer body portion, the outer and inner body portions being provided with suitable threads to allow them to fit securely together the outer body portion comprising the sealing member, one or more inlet slots, one or more outlet slots and an engaging means and the inner body portion comprising a central chamber having an inner body inlet at one end and one or more inner body outlets and wherein the or each inner body outlet is provided in a side wall of the central chamber towards the end of the central chamber opposite the inlet.

16. A service valve as claimed in claim 15 wherein the inner body fits within the outer body portion such that a path is provided for the flow of water from the inlet slots through the inner body inlet to the central chamber and then from the central chamber through the inner body outlets to the outlet slots and wherein the service valve incorporates any one or more of: a flow regulator; a check valve and a filter provided within the central chamber of the inner body portion.

17. A method of servicing a tap according to any one of claims 1 to 11 or of servicing a tap incorporating a service valve according to any one of claims 12 to 16, the method comprising the steps of: actuating the service valve from the same side of the mounting surface as the flow control valve is situated to cut off the water supply to the tap; attending to the required servicing; and actuating the service valve from the same side of the mounting surface as the flow control valve is situated to restore the water supply to the tap.

18. A method as claim in claim 17 wherein the method includes the further steps of: accessing the service valve by removing a hatch from a housing within which the service valve is provided prior to actuating the service valve to cut off the water supply; and replacing the hatch after actuating the service valve to restore the water supply.

19. A method as claimed in claim 17 or claim 18 wherein the service valve has a two part construction comprising an outer body portion and an inner body portion adapted in use to fit within the outer body portion and the step of servicing involves removing the inner portion from the outer portion.

20. A method as claimed in claim 19 wherein the service valve incorporates any one or more of: a flow regulator; a check valve and a filter provided within the central chamber of the inner body portion and the method includes the further step of removing each provided item from the central chamber of the inner body portion.
